# EUROPÄISCHE PATENTSCHRIFT

(11) **EP 2 021 594 B1**
(45) Veröffentlichungstag und Bekanntmachung des Hinweises auf die Patenterteilung: **03.10.2012**
(21) Anmeldenummer: 07725178.3
(22) Anmeldetag: 14.05.2007
(51) Int. Cl.: F01N 3/022, F01N 3/28, B01J 35/04, B28B 3/20

(54) **Von einem Fluid durchströmbare Vorrichtung, welche als solarer Receiver ausgebildet ist**
Device suitable for a fluid through-flow formed as a solar receiver
Dispositif traversable par un fluid et formé en tant que récepteur solaire

(30) Priorität: 15.05.2006 DE 202006007876 U
(43) Veröffentlichungstag der Anmeldung: 11.02.2009
(73) Patentinhaber: Bauer Technologies GmbH, 56204 Hillscheid (DE)
(72) Erfinder: BAUER, Elke, 59439 Holzwickede (DE); KRYTS, Ottmar, 61231 Bad-Nauheim (DE); BAUER, Jörg, 56427 Siershahn (DE)
(74) Vertreter: Kampfenkel, Klaus
(86) Internationale Anmeldenummer: PCT/EP2007/004259
(87) Internationale Veröffentlichungsnummer: WO 2007/131755

(56) Entgegenhaltungen:
- EP-A1- 0 283 220
- EP-A1- 1 541 817
- EP-A2- 0 285 362
- WO-A-94/09901
- WO-A-2005/121513
- DE-A1- 3 235 363
- DE-A1- 10 240 483
- DE-C1- 19 830 342
- DE-U1-202004 013 009
- US-A- 4 042 738
- US-A- 4 740 408
- US-A- 5 013 232

## Beschreibung

Die Erfindung betrifft eine von einem Fluid durchströmbare Vorrichtung mit einer zellulären Struktur, welche als solarer Receiver ausgebildet ist.

Die Patentschrift US 4,018,211 zeigt einen solaren Receiver mit einer Wabenstruktur, die fluidführende Kanäle bildet.

Gemäß vorliegender Erfindung soll die mechanische Stabilität einer zellulären Struktur, welche einen solaren Receiver bildet, erhöht werden.

Während konventionelle zelluläre Strukturen die Fortpflanzung von Kraftfeldlinien, hervorgerufen durch mechanische und/oder durch thermische Spannungen, durch Zugspannungen, durch Druckspannungen, durch Biegespannungen oder durch Kombinationen derselben, ermöglichen, ist das erfindungsgemäße Konstruktionsmerkmal die Integration von spannungsaufteilenden und / oder spannungsumlenkenden Elementen in den Arbeitsbereich des Produktes, beispielsweise in die im Betrieb angeströmte Fläche, insbesondere die Filterfläche.

Die Erfindung betrifft für mehr oder weniger rechteckige Zellstrukturen die Einfügung von innen hohlen Elementen in einzelnen oder mehreren Knotenpunkten der zellulären Strukturen, wobei der Innendurchmesser der Spannungsauffang- und Spannungsumlenkelemente meist größer gewählt ist als die der Wandstärke der Zellstruktur.

Thermische und mechanische Spannungen bewirken an den Wandübergangostellen und / oder an Verbindungsstellen eine erhöhte Gefahr der Rissbildung hervorgerufen durch Spannungsspitzen. Erfindungsgemäß ist das Konstruktionsmerkmal die Zufügung von Spannungsspitzenverhinderungselementen in den Eckpunkten der Kontaktstellen in der Form, dass die Verbindungswinkel der Kanalwandungen, egal welchen Winkel sie zueinander einnehmen durch mehr oder weniger ausgeprägte Abrundungselemente ergänzt werden. Die Dimension und Biegung der Spannungsspitzenverhinderungselemente richtet sich dabei nach dem Maß der zu erwartenden Spannungen und dem verfügbaren Platz.

Insbesondere aber nicht ausschließlich ist ein unterschiedliches Volumen- und / oder Querschnittsverhältnis der Zellen in einem Bauteil erforderlich. Eine beispielhafte Ausführungsform umfaßt Abstandselemente zwischen den einzelnen Kanälen des Bauteiles in der Form, dass am Beispiel von runden Kanälen mit gleichmäßiger Anordnung in Viererkombination, die ein fünftes Kanalelement bilden jeweils an gegenüberliegenden Kreissegmenten ein Verbindungselement beliebiger Länge eingesetzt wird. Je nach Länge dieses Verbindungselementes verändert sich dabei das Verhältnis der Größen der fünften Elemente. In der Ausführungsform der dreieckigen versetzten Anordnung der Strömungskanäle, bei denen drei Kanäle einen vierten Kanal umschließen wird analog jeweils ein Verbindungselement zwischen die Kanäle gesetzt. Je nach Länge dieses Verbindungselementes verändert sich dabei das Verhältnis der Größen des vierten Elementes. Analog ist die Konstruktion dahingehend zu verstehen, dass dieses Konstruktionselement auf alle anderen geometrischen Kanalformen angewendet werden kann,

Nachstehend werden einige Problematiken der solaren Receiver und deren Konstruktionselemente beispielhaft und ohne Beschränkung der Allgemeinheit stellvertretend dargestellt und erfindungsgemäß in Anspruch genommen:

In der solaren Energiegewinnung bestehen Problematiken bei den solaren Receivern für die als Solarthermiekraftwerke genannten Energiewandler. Ein Problemfeld ist der Strömungswiderstand der Receiver, der die Strömungsgeschwindigkeit der Wärmetauscherluft nachhaltig beeinflusst

Ein weiteres Problemfeld ist die ungleichmäßige Aufheizung der Receiver als Einzelbauteil betrachtet

Ein weiteres Problemfeld ist die monolithische gleichförmige Bauform der Strömungskanäle, die in sich lediglich einen begrenzten Energieübergang zwischen Receiver und Trägerluft ermöglichen

Ein weiteres Problemfeld ist die Reaktionsträgheit der Receiver bei schnell wechselnden Einstrahlungsenergiekonzentrationen.

In der Energiegewinnung von nicht unbeachtlicher Bedeutung ist die Problematik des Verlustes an Reaktionsfläche für den Energietransfer durch Montageflächen

Ein letztes genanntes Problem, welches nicht als abschließend zu werten ist, ist die durch die Receiver hervorgerufene Gewichtsbelastung auf die Unterkonstruktion

Die insbesondere für diese Problemfelder definierbaren Konstruktionselemente stellen sich erfindungsgemäß nachstehend dar, wobei die Aufstellung lediglich beispielhaft ist. Weitergehende Konstruktionselemente erkennt der Fachmann in den Prinzipien, die sich aus den Beispielen ergeben

Das funktionelle Problem des zur Strömungserzeugung notwendigen Druckes kann ganz grundsätzlich durch das Konstruktionselement der verkürzten Länge der solaren Receiverkanäle entgegengewirkt werden. Bei der Erhöhung der Wandkontakte durch geeignete Elemente, welche zu erhöhtem Wärmeaustausch zwischen Receiverwandoberfläche und Trägerluft führen ist eine funktionelle Verkürzung der Receiverlänge auf Werte von unter 100 Millimeter möglich. Unter dem Aspekt der Wirtschaftlichkeit im Anlagenbau sind hier vorzugsweise Receiverbauteilhöhen von unterhalb 100 Millimeter, vorzugsweise unterhalb von 80 Millimeter idealerweise zu bevorzugen.

Der Grundsatzproblematik der ungleichmäßigen Aufheizung der solaren Receiver über deren Querschnitt kann durch das Konstruktionselement dahingehend entgegengewirkt werden, dass experimentell und / oder rechnerisch ermittelte bereiche erhöhter Temperatur eine höhere Trägerluftdurchströmung zugeordnet wird als denen geringerer Temperaturen.

Erreicht wird dies in dem Konstruktionselement durch eine Vergrößerung der Receiverkanalquerschnitte und / oder durch die Integration von Strömungskanalquerschnitten geringeren Strömungswiderstandes.

Die dadurch bedingte Erhöhung der Durchströmungsgeschwindigkeit des Trägermediums bewirkt eine stärkere Abkühlung und führt so zu einem Temperaturausgleich. Besonders vorteilhaft ist dieses Konstruktionselement an Eckpunkten der Receiveroberfläche ausführbar. Dabei kann dieses Konstruktionselement über die ganze Receiverkanallänge ausgeführt werden, oder lediglich auf der Energieeinstrahlseite und / oder auf der Austragungsseite des Trägerstromes.

Die Problematik der nach dem Stand der Technik monolithisch ausgeführten Receiverkanäle bewirkt durch die niedrigen Strömungsgeschwindigkeiten meistens nur einen nicht turbulenten Trägerluftstrom, der durch den gleichförmigen Volumenfluss eine geringe Wärmeübergangswirkung von Receiverkanaloberfläche zu Trägerluft aufweist.

Diesem Problem kann durch ein Konstruktionselement dahingehend Rechnung getragen werden, dass in den Strömungsverlauf Abrisskanten eingebaut werden, die eine moderate Verwirbelung des Volumenstromes bewirken, ohne dabei selbst thermische Blockaden auszulösen. Eine exemplarische Ausführungsform ist dabei eine Verstärkung der Kanalwandungen nach der wärmeeintrittszone. Die auf die Verstärkung treffende Luftströmung stößt auf die Verbreiterung und wird dort verwirbelt. Die gleiche Wirkung ergibt sich, wenn das Konstruktionselement dahingehend ausgeführt wird, dass mehrere Absorberkanäle der Eintrittseite in einem Fortführungskanal münden. An der Übergangsstelle enden Kanalwandungen der Eintrittseite und bilden ebenfalls Abrisskanten und / oder Übergänge, die zu Verwirbelungen und damit besserem Wärmeübergang führen.

Die Problematik der Receiverträgheit in Bezug auf die Absorptionsenergie bewirkt eine massive Beeinflussung des erreichbaren Temperaturgradienten in der Trägerluft. Je größer die Temperaturdifferenz der eingeleiteten Luft zur aufgeheizten Luft nach Receiverdurchtritt ist, umso geringer kann der Luftvolumenstrom bei gleicher Energietransportleistung gewählt werden, und / oder bei gleicher Volumenstromdimension die nutzbare Energietransformation entsprechend erhöht werden. Da die einleitenden Energiestrahlen nur wenige Millimeter direkt in die Receiveroberfläche eindringen ist das Konstruktionselement das der maximalen Absorptionsoberfläche bei geringstem Strömungswiderstand.

Vorzugsweise, aber nicht ausschließlich wird dies durch die Konstruktion von mehr oder weniger runden Einlassöffnungen erreicht, denen optional durch die Oberflächengestaltung der Strömungskanäle zusätzliche Absorberflächen z.B. in der Form von Ausbuchtungen, Einbuchtungen, Stegsegmenten oder Zusatzsegmenten zugeordnet wird. Diese unter strömungs- und wärmeübergangsmäßig optimal konfigurierbare Absorberoberfläche kann zur Reduzierung des Strömungswiderstandes bereits nach wenigen Millimetern in einen strömungstechnisch optimalen Kanalquerschnitt überführt werden. Dabei ist es von erfindungsgemäßem Vorteil, wenn die Receiveroberfläche für die Energieaufnahme in den Receiver mit schnell reagierenden Materialkompositionen, z.B. durch geringe Dichte, durch Feinkörnigkeit, und / oder durch Porenvolumen und Größe direkt oder indirekt an einen tiefer liegenden Receiverteil angrenzen, der eine höhere Wärmspeicherkapazität aufweist und als ausgleichendes Receiverelement dient und dabei gleichzeitig stabilitätserhöhende Eigenschaften aufweist.

Das Konstruktionsmerkmal für die Problematik der für die Energiegewinnung nicht zur Verfügung stehenden Reaktorfläche wird dahingehend gelöst, dass die einzelnen Receiver der Reaktionsfläche durch die Integration von spannungsabführenden oder spannungsumleitenden Teilsegmenten, so dass nach dem Stand der Technik mit mehreckigen Receiverzellen größer flächige Receiverelemente erreicht werden können, d.h. mit mindestens 100 cm² Reaktionsfläche, vorzugsweise jedoch mit Reaktionsflächen der einzelnen solaren Receiver von mehr als 196 cm². Dadurch wird die Reduzierung der Reaktionsfläche durch die Trägerkonstruktion nachhaltig verringert, so dass diese gewonnene Fläche für die Energiegewinnung verwendet werden kann.

Das Konstruktionselement für die Problematik der Gewichtsbelastung der Reaktorflächenunterkonstruktion wird dahingehend gelöst, dass die für die solaren Receiver eingesetzten Materialien mit einer Porosierung versehen werden, welche die effektive Wärmeleitfähigkeit innerhalb des Receivermaterials nur unwesentlich beeinflusst. Zu diesem Zweck wird das Receivermaterial entweder aus porösen Metallen oder aus porösen Keramiken derart aufbereitet, dass die Kristallbestandteile innige Kontaktstellen aufweisen - und damit die erforderliche Festigkeit und Wärmeleitungsfähigkeit erlangen, ohne dass die Rohdichte des Receivermaterials hoch ist.

Für eine technologische Optimierung der solaren Receiver hat sich das Konstruktionselement der multiplen Einzelelemente als möglich erwiesen. Mit diesem Element werden verschiedenartige Strömungsstrukturen und / oder Materialien und / oder Materialeigenschaften wie Dichte, Wärmeleitfähigkeit, Porosität und / oder verschiedener Heratellungstechniken aufeinandergepackt was zu einem Packet führt und entweder zu einem Bauteil fest zusammengefügt oder lediglich durch die Gehäuseeinfassung zusammengehalten oder gar nur durch das Eigengewicht aufeinandergedrückt werden , wobei der beim Betrieb entstehende Druck des Trägerluftstromes seinen Beitrag zum Zusammenhalt liefert. Dadurch ist es möglich auf die unterschiedlichsten thermomechanischen Zustände des solaren Receivers und den Zielanforderungen an die einzelnen Ebenen des Receivers gezielt einzugehen, ohne Material- und / oder Formeinschränkungen in Kauf nehmen zu müssen. So kann beispielhaft, und damit nicht ausschließlich, in der Eintrittszone des solaren Receivers ein Thermobooster aus hochtemperaturbeständigem keramischen Material mit geringer Wärmeformänderung, aber mit extrem hoher Absorberleistung eingesetzt werden, gefolgt von einem metallischem wärmeübertragungselement mit Kanalform, welcher von einer Schaummatrix abgeschlossen wird.

Die Erfindung stellt eine von einem Fluid durchströmbare vorrichtung zur Verfügung welche als solarer Receiver ausgebildet ist und welche einen Arbeitsbereich mit einer zelluläre Struktur umfaßt, welche aus im wesentlichen rechteckigen Zellstrukturen aufgebaut ist, wobei der Arbeitsbereich neben den Wänden, welche zur Bildung der im wesentlichen rechteckigen Zellstrukturen mindestens erforderlich sind, als mindestens ein Versteifungselement zusätzliche Verstrebungen aufweist, welche durch die Einfügung von innen hohlen Elementen in einzelnen oder mehreren Knotenpunkten der zellulären Struktur gebildet sind und welche dazu geeignet sind, mechanische Spannungen aufzuteilen und/oder umzulenken.

Die erfindungsgemäße Vorrichtung umfaßt Versteifungselemente in der zellulären Struktur. Die Vorrichtung weist dazu einen Bereich auf, welcher neben den Wänden, welche zur Bildung der zellulären Struktur mindestens erforderlich sind, zusätzliche Verstrebungen auf.

In einer weiteren Ausführungsform der Erfindung umfaßt die Vorrichtung mindestens zwei Bereiche mit unterschiedlich großen Zellen in der jeweiligen zellulären Struktur.

Die die zelluläre Struktur bildenden Elemente der Vorrichtung, insbesondere die Wände, sind in einer Ausführungsvariante der Erfindung porös und umfassen beispielsweise eine Keramik, insbesondere gesintertes Siliziumkarbid, und/oder zumindest ein Metall und/oder zumindest ein Glas.

Bei einer Weiterbildung der Erfindung weist die Vorrichtung zumindest einen Kontaktstreifen und/oder Erhöhungen und/oder Erhöhung der Oberflächenrauhigkeit der Wandungen auf, so daß die Vorrichtung dazu geeignet ist, den Wandkontakt des Volumenstromes zu erhöhen.

Durch die Integration von spannungsumlenkenden und/oder spannungsaufnehmenden Elementen in der Kanalstruktur kann die Vorrichtung eine Reaktionsfläche von mindestens 100 Zentimetern im Quadrat, vorzugsweise jedoch mehr als 196 Zentimetern im Quadrat aufweisen.

In einer bevorzugten Ausführungsform der Erfindung weist die Vorrichtung zumindest einen Einlass- und zumindest einen Auslaßkanal auf. Vorteilhafterweise ist bei dieser Vorrichtung gemäß der Erfindung das Verhältnis der Querschnittsfläche des Einlaßkanals zur Querschnittsfläche des Auslaßkanals größer als 1 und liegt bevorzugt im Bereich von etwa 1,4 bis etwa 1,8, besonders bevorzugt bei etwa 1,6.

Zur Herstellung einer von einem Fluid durchströmten Vorrichtung, wie sie zuvor beschrieben ist, steht ein Verfahren zur Verfügung, bei welchem eine von einem Fluid durchströmbare Vorrichtung mit einer zellulären Struktur geschaffen wird, wobei die die zelluläre Struktur aufbauenden Elemente, insbesondere die Wände der Vorrichtung, porös sind, wobei eine plastisch verformbare und anschließend verfestigbare Masse bereitgestellt wird und die folgenden beiden Schritte abwechselnd wiederholt, um schichtenweise eine bestimmte zelluläre Struktur aufzubauen:
- Erzeugen einer entsprechend der zellulären Struktur strukturierten Schicht aus der Masse,
- Verfestigen der Schicht,
wobei die strukturierte Schicht in Bezug auf den Anwendungsfall konstruiert wird. Bei der Konstruktion der Schicht beziehungsweise der zellulären Struktur wird wie oben beschrieben anhand des modularen Systems zur Optimierung vorgegangen.

Zur Verdeutlichung der Systematik der Systemlösung über modulare Bauteile sind nachstehend einige exemplarische, und damit nicht ausschließliche, Ausführungsbeispiele für die Umsetzung der Erfindung aufgeführt.
Das System der modularen Problembehandlung über Komponenten kann im Rahmen eines Herstellungsverfahrens des dreidimensionalen Siebdruckes nach der EP 0627983 oder aber auch zum Drucken des Filterlementes über die, ebenfalls in dieser Patentschrift beschriebenen Methode des Düsendruckens angewendet werden.

Besonders geeignet zum Herstellen einer oben beschriebenen von einem Fluid durchströmbaren Vorrichtung mit einer zellulären Struktur oder eines oben beschriebenen Konstruktionselemente ist das folgende Verfahren.

Dies betrifft ein Verfahren zum Herstellen einer von einem Fluid durchströmbaren Vorrichtung mit einer zellulären Struktur oder eines Konstruktionselements, insbesondere wie oben beschrieben, wobei die die zelluläre Struktur aufbauenden Elemente, insbesondere die Wände der Vorrichtung, porös sind, wobei eine plastisch verformbare und anschließend verfestigbare Masse bereitgestellt wird und die folgenden beiden Schritte abwechselnd wiederholt werden, um schichtenweise eine bestimmte zelluläre Struktur aufzubauen:
- Erzeugen einer entsprechend der zellulären Struktur strukturierten Schicht aus der Masse,
- Verfestigen der Schicht,
wobei die strukturierte Schicht in Bezug auf den Anwendungsfall konstruiert wird.

Die Erfindung wird nachfolgend unter Bezugnahme auf die beigefügten Figuren anhand von weiteren Ausführungsbeispielen näher erläutert, wobei im Zusammenhang mit den die Erfindung betreffenden zellulären Strukturen diese auch im Zusammenhang mit von einem Fluid durchströmbaren Vorrichtungen beschreiben werden, die nicht als solarer Receiver ausgebildet sind.

Es zeigen:
Figur 1 Eine schematische Darstellung einer zellulären Struktur für einen Dieselpartikelfilter im Querschnitt (links) und in einer vergrößerten Detailansicht (rechts),
Figur 2 schematische Darstellungen von Elementkombinationen für einen Dieselpartikelfilter in einer weiteren Ausführungsform der Erfindung,
Figur 3 eine schematische Darstellung einer zellulären Struktur für einen Katalysator im Querschnitt, und
Figur 4 schematische Darstellungen zellulärer Strukturen für einen Solarthermiereceiver.

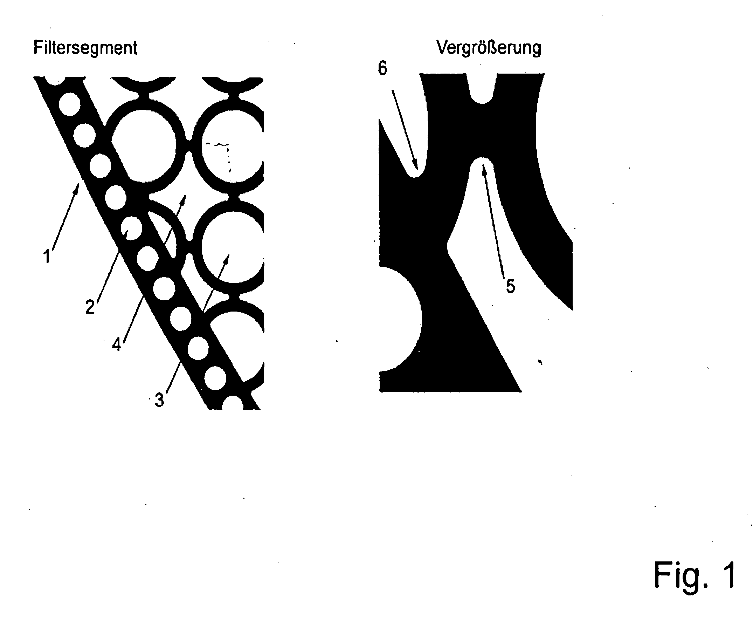

Exemplarisch, und damit nicht ausschließlich, sondern lediglich stellvertretend für andere aus der Schrift ableitbaren Lösungsprodukte, ist ein Ausführungsbeispiel für einen Dieselpartikelfilter für Personenkraftwagen in Figur 1 dargestellt. Dabei bezeichnet 1 die verstärkte Außenwandung, 2 ein Spannungsauffangelement in der Außenwandung, 3 einen Einlasskanal, 4 einen Auslasskanal, 5 einen Kanalübergangssteg und 6 bezeichnet ein Abrundungselement.

Die Form der Übergänge zwischen Einlaß- und Auslaßkanälen sowie die Form der Spannungsauffangelemente kann im Rahmen der Erfindung ebenso wie die Außenmaße des Bauteils frei gewählt werden. Insbesondere kann, wie in Figur 1 gezeigt, eine runde Formgebung, beispielsweise mit kreisbogenförmigen Übergängen beziehungsweise kreisförmigen Spannungsauffangelementen gewählt werden. Je nach Anwendungsfall kann die Formgebung der einzelnen Elemente, die ein Filtersegment, wie in Figur 1 dargestellt, umfassen, auch ungleichmäßig sein und/oder neben Kreisformen auch andere Formen wie beispielsweise Ellipsen, Schrägen, Vielecke und so weiter umfassen.

Zusätzlich oder alternativ zur Formgebung kann das Verhältnis des Querschnitts des Einlaßkanals 4 zum Querschntt des Auslaßkanals 5 größer als 1 und liegt bevorzugt im Bereich von etwa 1,4 bis etwa 1,8, besonders bevorzugt bei etwa 1,6 liegen.

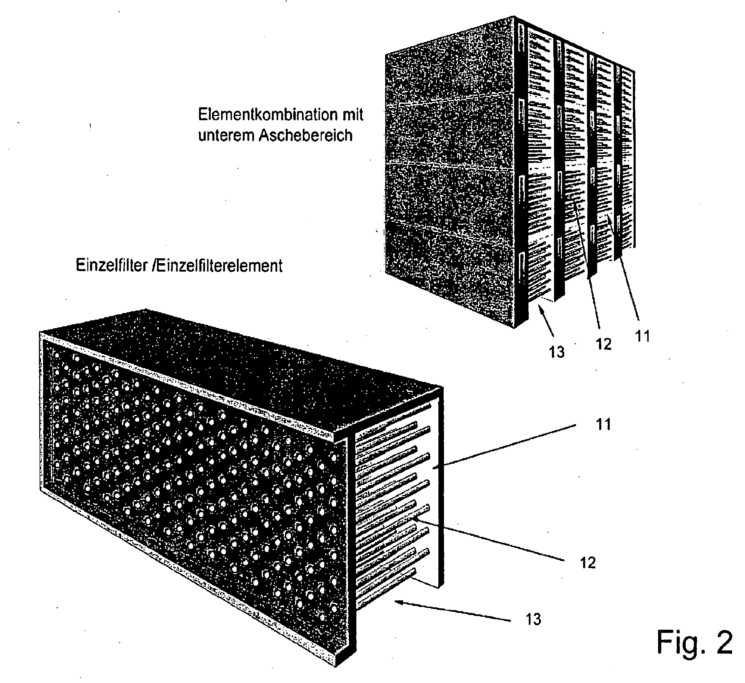

Nicht erfindungsgemäßes Beispiel 2; LKW Rußfilter Im wesentlichen stellen sich bei der Betrachtung der Partikelfiltration von Lastkraftwagen ähnliche Problematiken wie bei den Personenkraftwagen aus Beispiel 1 dar. Hier ist allerdings die Gewichtung vollkommen anders ausgerichtet, so dass die wesentlichsten Problematiken sich auf die Laufleistung der Antriebsaggregate beziehen, die im siebenstelligen Kilometer-Bereich liegen können. Auch ist der Anfall der Rußmenge besonders bei Lastfahrten wesentlich größer und schneller. Wendet man das System der modularen Problemlösung über Komponentenbausteine auf diesen Anwendungsfall hin an, so kommt man zu dem Ergebnis, dass für diese Art von Antriebsaggregaten in der Ausgestaltungsform der Einlasskammer mit integrierten Filterkanälen die sinnvollste und technologisch wirkungsvollste Filterelementform ist. Die in der Patentanmeldung WO 2005/033477 beschriebene Beruhigungskammer stellt dabei keine Lösung der Austragungsproblematik für die Asche dar, da sich in dieser nicht nur Asche, sondern im wesentlichen Ruß ansammelt, der kaum von den regenerativen Bedingungen erreicht werden kann. In einer Ausgestaltungsform ist ein solcher erfindungsgemäßer Dieselpartikelfilter, der aus einem Teil, aber auch aus mehreren zusammengesetzten Teilen bestehen kann, zur Verdeutlichung in Figur II dargestellt. Es versteht sich, dass in der konstruktiven Gestaltung die Integration von Gradienten in der Teileanordnung und Lage, die Graduierung von Porositäten und , aber nicht ausschließlich die Strömungsrichtungen und anderes, leicht vom Fachmann nachvollziehen lassen können und in das Lösungssystem integriert werden können.
Dabei wird in Figur 2 mit 11 die Einlasskammer, mit 12 ein Filtrationskanal und mit 13 der Ascheansammlungsbereich bezeichnet bei dem, nicht dargestellt, die Austragungsvorrichtung implementiert werden kann. In dieser Ausführung ist es selbstverständlich, dass Konstruktionselemente dieser Schrift, wie sie auch bei dem Partikelfilter für Personenkraftwagen vorliegen und / oder denen des Katalysators, auch hier integriert werden können Besonders ist in diesem Beispiel hervorzuheben, dass die Einbaurichtung unabhängig gewählt werden kann, was auch eine Einströmung des Abgasvolumenstromes von oben her ermöglicht, was wiederum der Ascheansammlung zugute kommt, die damit wesentlich durch die Schwerkraft erleichtert wird. Dargestellt ist ein Filter mit Gegenstrom.
Es hat sich gezeigt, dass auch in diesem Produktfall, die Herstellungsmethode nach der Patentschrift EP 0627983 die geeignetste ist.

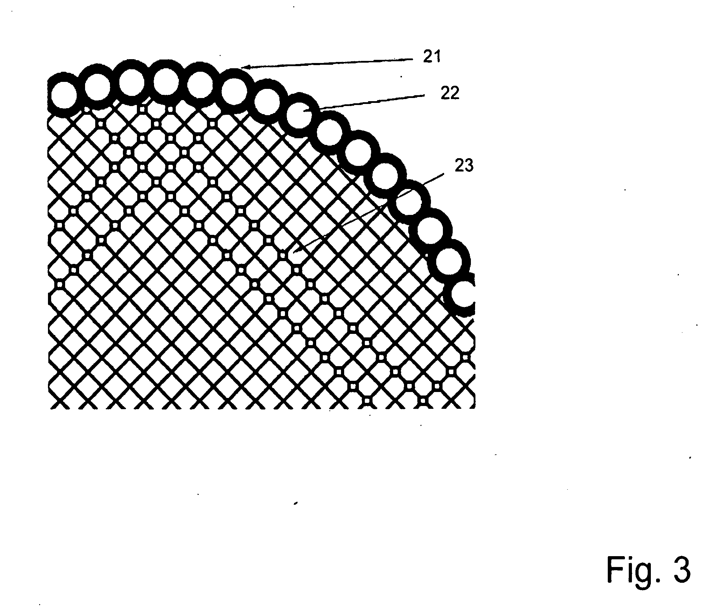

Nicht erfindungsgemäßes Beispiel 3: Katalysator Im Falle der Katalysatoren stellen sich die heutigen Problematiken weniger dramatisch dar und ein dringender Handlungsbedarf zur Verbesserung derselben besteht im Wesentlichen nur aus marketingrechtlicher Sicht, insbesondere als Abgrenzungsmerkmal im Verdrängungswettkampf, insbesondere in der Besetzung von Nischenmärkten. Insofern kann als eine beispielhafte und damit nicht ausschließliche Anwandungsausführung des Systems der modularen Problemlösung durch Komponentenelemente hier ein exemplarisches, um Einzelheiten reduziertes Beispiel in Figur 3 aufgeführt werden. Dabei bezeichnet 21 eine verstärkte Außenwandung, 22 die Integration von Spannungsauffang- und umlenkelementen in der Außenwandung und 23 bezeichnet die Integration von Umlenkelementen für thermomechanische Spannungen in die Kanalstruktur. Weitere Komponentenelemente lassen sich vom Fachmann leicht in dieses System integrieren und werden ebenfalls beansprucht.

### Beispiel 4: Solarer Receiver

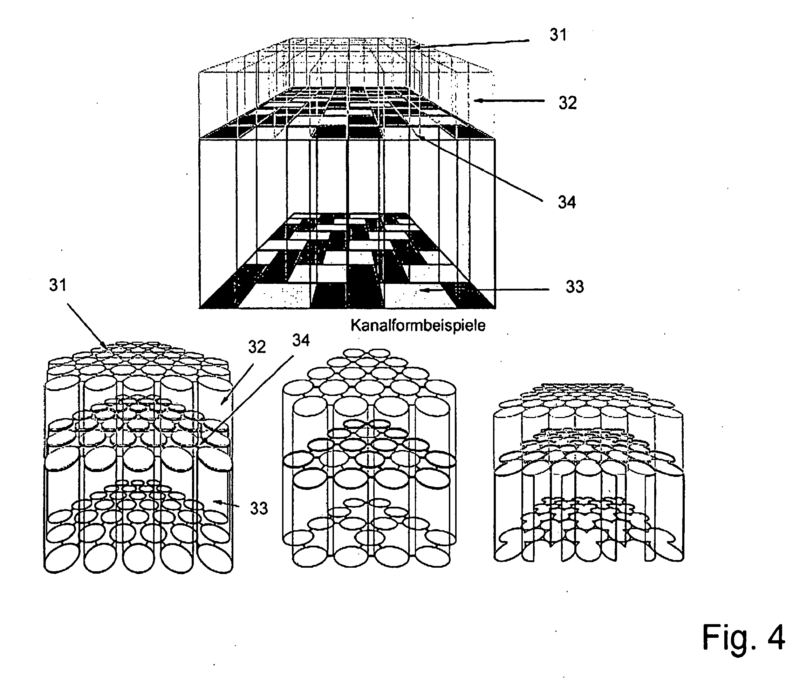

In der solarthermischen Energiegewinnung wir die gebündelte Lichtenergie auf die Oberfläche des Absorbers geleitet und von diesem aufgenommen. Dabei wird in Einstrahlungsrichtung Luft durch den Absorber gesaugt, welche sich durch die absorbierte Wärmeenergie der Lichtstrahlung aufheizt und im Anschluss entweder direkt verwendet wird, oder durch Wärmetauscherprozesse, z.B. Dampferzeugung, zur konventionellen Gewinnung elektrischer Energie verwendet wird. In dem exemplarisch ausgeführten Beispielen der Figur 4 sind einige, und damit nicht ausschließliche, Möglichkeiten der solaren Receivergestaltung skizziert, wie sie aus der vorliegenden Schrift generiert und hergestellt werden können. Es ist für den Fachmann leicht nachvollziehbar, dass hier auch Konstruktionselemente der Partikelfilter, der Katalysatoren und anderer Anwendungen auf den solaren Receiver angewendet werden können, die erfindungsgemäß ebenfalls beansprucht werden. Dabei bezeichnet 31 die einleitende Oberfläche des solaren Receivers, 32 die Energieübertragungskanäle, 33 die Strömungskanäle und 34 bezeichnet die Strömungsabrisskante.

Das System wird zur modularen Problemlösung in dem Bereich der erneuerbaren Energiegewinnung für den solaren Receiver, dem Wärmetauscher und der Windkraftnutzung, aber auch bei dessen Verwendung in flüssigen Medien wie schwerkraftbetriebenen Energiegewinnungsanlagen, erdwärmebezogenen Energiegewinnungsanlagen oder gezeitenbetriebene Energiegewinnungsanlagen, in Anspruch genommen.

Des weiteren wird das System zur modularen Problemlösung in dem Bereich der Fügtechnik, beispielhaft und damit nicht ausschließlich für die Gehäusekomponentenabdichtung, den Entkoppelungskomponenten und den Ausgleichskomponenten in Anlagenbauteilen und deren Verbindung, in Anspruch genommen.

Allen Konstruktionselementen gemeinsam ist, dass diese am besten mit dem Herstellungsverfahren nach der Patentschrift EP 0627983 ausgeführt werden können, Insbesondere der dreidimensionale Siebdruck erlaubt hier eine umfangreiche Abdeckung der Herstellungsmöglichkeit für die vorstehenden Produkte mit weitreichender Überlappung der Komponentenlösungen innerhalb eines Bauteiles. Es wird daher beansprucht, dass die Verwendung der Systemlösung anhand von Modulen nach dieser Schrift vorzugsweise aber nicht ausschließlich mittels dem Verfahren nach der EP 0627983 umgesetzt wird. Realisierbar ist die Umsetzung des Systems der modularen Lösung für zelluläre Produkte mit den Herstellungsverfahren des Strangpressens, des Foliengießens, des Folienziehens, des Schlickergießens, des Schäumens, des Düsendruckens und weiterer geeigneter Herstellungsverfahren, welche eine serientaugliche Umsetzung erlauben.

## Patentansprüche

1. Von einem Fluid durchströmbare Vorrichtung, welche als solarer Receiver ausgebildet ist und welche einen Arbeitsbereich mit einer zellulären Struktur umfaßt, welche aus im wesentlichen rechteckigen Zellstrukturen aufgebaut ist,
wobei der Arbeitsbereich neben den Wänden, welche zur Bildung der im wesentlichen rechteckigen Zellstrukturen mindestens erforderlich sind, als mindestens ein Versteifungselement zusätzliche Verstrebungen aufweist,
welche durch die Einfügung von innen hohlen Elementen in einzelnen oder mehreren Knotenpunkten der zellulären Struktur gebildet sind, welche dazu geeignet sind, mechanische Spannungen aufzuteilen und/oder umzulenken.

2. Vorrichtung nach Anspruch 1 mit mindestens zwei Bereichen mit unterschiedlich großen Zellen in der jeweiligen zellulären Struktur.

3. Vorrichtung nach einem der vorangegangenen Ansprüche wobei die die zelluläre Struktur bildenden Elemente, insbesondere die Wände, porös sind und beispielsweise eine Keramik, insbesondere gesintertes Siliziumkarbid, und/oder zumindest ein Metall und/oder zumindest ein Glas umfassen.

4. Vorrichtung nach einem der vorangegangenen Ansprüche, **dadurch gekennzeichnet, dass** die Vorrichtung zumindest einen Kontaktstreifen und/oder Erhöhungen und/oder Erhöhung der Oberflächenrauhigkeit der wandungen aufweist, so daß die Vorrichtung dazu geeignet ist, den Wandkontakt des Volumenstromes zu erhöhen.

5. Vorrichtung nach einem der vorstehenden Ansprüche,
**dadurch gekennzeichnet, dass** durch die Integration von spannungsumlenkenden und/oder spannungsaufnehmenden Elementen in der Kanalstruktur eine Reaktionsfläche von mindestens 100 Zentimetern im Quadrat, vorzugsweise jedoch mehr als 196 Zentimetern im Quadrat aufweist.

## Claims

1. Device which can have a fluid flowing through it, is formed as a solar receiver and includes a working region having a cellular structure which is formed of substantially rectangular cell structures,
wherein the working region comprises, in addition to the walls which are at least required to form the substantially rectangular cell structures, additional strut members as at least one reinforcing element,
which are formed by inserting internally hollow elements in individual or several nodal points of the cellular structure which are suitable for dividing and/or diverting mechanical stresses.

2. Device as claimed in Claim 1, having at least two regions having cells of different sizes in the respective cellular structure.

3. Device as claimed in any one of the preceding claims, wherein the elements forming the cellular structure, in particular the walls, are porous and include e.g., a ceramic, in particular sintered silicon carbide, and/or at least one metal and/or at least one glass.

4. Device as claimed in any one of the preceding claims, **characterised in that** the device comprises at least one contact strip and/or elevations and/or an increase in the surface roughness of the walls, so that the device is suitable to increase the wall contact of the volume flow.

5. Device as claimed in any one of the preceding claims, **characterised in that** by way of the integration of stress-deviating and/or stress-accommodating elements in the channel structure, a reaction surface has at least 100 square centimetres, but preferably more than 196 square centimetres.

## Revendications

1. Dispositif où peut s'écouler un fluide, qui est réalisé comme récepteur solaire et qui comprend une zone de travail présentant une structure cellulaire constituée de structures de cellules sensiblement rectangulaires,
la zone de travail présentant, en plus des parois au moins exigées pour la formation des structures de cellules sensiblement rectangulaires, des entretoises supplémentaires sous la forme d'au moins un élément de renforcement,
lesquelles sont formées par insertion d'éléments intérieurement creux dans des points de connexion individuels ou multiples de la structure cellulaire, ceux-ci étant prévus pour répartir et/ou dévier des contraintes mécaniques.

2. Dispositif selon la revendication 1, comportant au moins deux zones avec des cellules de grandeur différente dans la structure cellulaire correspondante.

3. Dispositif selon l'une des revendications précédentes, dans lequel les éléments formant la structure cellulaire, en particulier les parois, sont poreux et contiennent notamment une céramique, en particulier du carbure de silicium fritté, et/ou au moins un métal, et/ou au moins un verre.

4. Dispositif selon l'une des revendications précédentes, ledit dispositif étant **caractérisé en ce qu'**il comporte au moins une bande de contact, et/ou des reliefs, et/ou un renforcement de la rugosité de surface des parois, de manière à rendre le dispositif apte à accroître le contact de paroi du débit volumique.

5. Dispositif selon l'une des revendications précédentes, **caractérisé en ce qu'**une surface de réaction d'au moins 100 centimètres carrés, de préférence toutefois supérieure à 196 centimètres carrés, est obtenue par intégration d'éléments de déviation et/ou d'absorption des contraintes dans la structure de canal.
